# EUROPEAN PATENT SPECIFICATION

(11) **EP 3 199 706 B1**
(45) Date of publication and mention of the grant of the patent: **01.04.2020**
(21) Application number: 17151959.8
(22) Date of filing: 18.01.2017
(51) Int. Cl.: E02B 7/20, E02C 1/00

(54) **PRE-FABRICATED WATER CONTROL SLUICE GATE SYSTEM**
VORGEFERTIGTES SCHLEUSENTORSYSTEM ZUR WASSERKONTROLLE
SYSTÈME PRÉFABRIQUÉ DE VANNE À GLISSIÈRES DE COMMANDE D'EAU

(30) Priority: 28.01.2016 DK 201600057; 22.03.2016 DK 201600176
(43) Date of publication of application: 02.08.2017
(73) Proprietor: Wintec Holding ApS, 7330 Brande (DK)
(72) Inventor: Bach, Jens Oliver, 7330 Brande (DK)
(74) Representative: Larsen & Birkeholm A/S

(56) References cited:
- WO-A1-2014/158876
- BE-A5- 1 004 982
- DE-B1- 2 838 431
- GB-A- 945 728
- JP-A- S5 938 409
- NL-C- 1 037 027

## Description

### Technical field of the invention

The present invention relates to a pre-fabricated water control sluice gate system and to a method using such pre-fabricated water control sluice gate system.

### Background of the invention

Sluice gates are used selectively to control water flow from one area of a channel to another by opening or closing off the channel to the water flow.

The frame/foundation of the sluice gate is cast directly at the application site of the sluice gate. The flow of water must be discontinued over the portion of land, where the sluice gate is to be placed, requiring many man hours of preparation before the actual casting process can be initiated. Furthermore, the construction time is long, as the cement needs to settle and harden before a sluice gate member can be installed therein. The weather conditions may affect the hardening of the cement, resulting in a frame/foundation of poor quality and strength. Furthermore, the frame/foundation is susceptible to undermining of the water. JP S59 38409 A discloses a pre-fabricated water control sluice gate system according to the preamble of claim 1.

It is therefore desirable to provide a system, which can eliminate some or all of the above problems.

### Summary of the invention

The problem is solved by the pre-fabricated water control sluice gate system of claim 1.

In one or more embodiments, the first frame is a pre-cast concrete frame.

In one or more embodiments, the first frame is a pre-cast reinforced concrete frame.

The term "pre-fabricated" respectively "pre-cast" as used throughout this application means the opposite of cast in situ. In other words, the pre-cast reinforced concrete frame is finished as finished structures when shipped to a builder or customer, rather than being poured into temporary forms at the building site or place of use.

As used herein, the term "reinforced concrete" refers to concrete into which reinforcement bars or fibres have been cast to carry tensile loads in order to strengthen a structure that would otherwise be brittle.

The first frame may also be made of metal, wood, or a castable material. It is to be understood that any suitable castable material, such as cement, mortar, concrete, ceramics, thermoset plastics, and thermoplastics can be used for producing the first frame.

In one or more embodiments, the side and/or base panels are made from a reinforced castable material.

In one or more embodiments, the side and/or base panels are made from a reinforced castable material, and wherein the reinforcement extends beyond the side and/or base panels.

As used herein, the term "reinforced castable material " refers to a castable material into which reinforcement bars or fibres have been cast to carry tensile loads in order to strengthen a structure that would otherwise be brittle.

In the present context, the term "lifting anchor" should be broadly construed to encompass any such device for lifting the first frame with or without sluice gate members and actuators installed therein. Alternatively, a coupler adapted for receiving a lifting anchor is embedded in the first frame. The coupler may comprise internal or external threading, depending on the configuration of the lifting anchor.

In one or more embodiments, the lifting anchor or coupler adapted for receiving a lifting anchor is mechanically tied into the reinforcing members embedded in the castable material, such as concrete.

In order to avoid that water will undermine the base panel; it may be an advantage to extend the base panels beyond the side panels, preferably beyond the front, back and outer side/face of the side panel. In one or more embodiments, the base panel extends beyond the side panels.

In one or more embodiments, the base panel extends beyond the front of the side panels.

In one or more embodiments, the base panel extends beyond back of the side panels.

In one or more embodiments, the base panel extends beyond the outer side/face of the side panels.

In one or more embodiments, the base panel extends beyond the front and/or the back and/or the outer side of the side panels.

In one or more embodiments, the part of the base panel extending beyond the side panels comprises channels adapted for receiving an earth anchor.

In one or more embodiments, the reinforcement extends beyond the side and/or base panels.

In one or more embodiments, the reinforcement extends beyond the side panels, preferably beyond the front and back of the side panel. This will allow the pre-fabricated sluice gate system to be built into other reinforced concrete structures.

In one or more embodiments, the reinforcement extends beyond the front of the side panels.

In one or more embodiments, the reinforcement extends beyond the back of the side panels.

In one or more embodiments, the reinforcement extends beyond the outer side/face of the side panels.

In one or more embodiments, the reinforcement extends beyond the front and/or the back and/or the outer side of the side panels.

In one or more embodiments, a part of the base panel is configured as a lower sluice gate member extending between the two side panels. The base panel is preferably pre-cast. This configuration has the advantage, that it increases the strength of the sluice gate against high water levels. A substantial part of the water pressure is thereby withheld by the entire structure of the first frame. Furthermore, the lower gate member prevents that water flow passing through the first frame will remove the dirt/foundation below the first frame. The water flow is thereby elevated further away from the dirt/foundation below the first frame; and the water close to the dirt/foundation below the first frame will be stagnant. The lower sluice gate member may be positioned in front of the sluice gate members to shield the latter, and/or may be positioned behind the sluice gate members to support the latter. In one or more embodiments, the lower sluice gate member has a height of at least 5 cm, such as within the range of 5-100 cm, e.g. within the range of 10-95 cm, such as within the range of 15-90 cm, e.g. within the range of 20-85 cm, such as within the range of 25-80 cm, e.g. within the range of 30-75 cm, such as within the range of 35-70 cm, e.g. within the range of 40-65 cm, such as within the range of 45-60 cm, e.g. within the range of 50-55 cm.

The lower sluice gate member may in one or more embodiments comprise air/water channels adapted to be connected to a source of water and/or compressed air. Water and/or compressed air may thereby be used to remove sediments blocking the function of the one or more gate members. Icing may also be prevented.

In one or more embodiments, the outlet of the channels is positioned in close proximity, such as within 0-20 cm, e.g. within 1-15 cm, such as within 2-10 cm, e.g. within 3-5 cm, to the one or more gate members.

In one or more embodiments, the base panel comprises air/water channels adapted to be connected to a source of water and/or compressed air.

In one or more embodiments, the pre-fabricated water control sluice gate system further comprises means for delivering water and/or compressed air to the air/water channels.

In one or more embodiments, the base panel comprises suction channels adapted to be connected to a source of suction. With or without the function of the air/water channels, the suction channels may be used to remove sediments blocking the function of the one or more gate members. Icing may also be prevented.

In one or more embodiments, the lower sluice gate member comprises suction channels adapted to be connected to a source of suction.

In one or more embodiments, the inlet of the suction channels is positioned in close proximity, such as within 0-20 cm, e.g. within 1-15 cm, such as within 2-10 cm, e.g. within 3-5 cm, to the one or more gate members.

In one or more embodiments, the pre-fabricated water control sluice gate system further comprises a source of suction adapted for being connected to the suction channels.

In one or more embodiments, the one or more sluice gate members are a flap gate, a mitre gate, a vertical rising gate, a radial sluice gate, a rising sector sluice gate, or a drum sluice gate, a sluice gate comprising a cylindrical surface, or combinations thereof.

In one or more embodiments, the inner side of the side panels each comprise a channel configured for receiving a moving gate member.

In one or more embodiments, the outer face of the side panels each comprise a channel configured for receiving a reinforcement plate adapted for being imbedded in the adjacent dam section.

In one or more embodiments, the pre-fabricated water control sluice gate system further comprises a casing adapted for receiving the first frame, the casing comprising two side panels and a base panel, wherein the base panel is adapted for supporting the base panel of the first frame, and wherein each side panel is adapted for supporting a side panel of the first frame. This allows for a system, where the first frame may be exchanged with a spare first frame during service. Furthermore, it may be an advantage to be able to reverse the operating direction of the sluice gate by turning it 180 degrees.

In one or more embodiments, the pre-fabricated water control sluice gate system further comprises a casing adapted for receiving the pre-cast reinforced concrete frame, the casing comprising two side panels and a base panel, wherein the base panel is adapted for supporting the base panel of the pre-cast reinforced concrete frame, and wherein each side panel is adapted for supporting a side panel of the pre-cast reinforced concrete frame. This allows for a system, where the pre-cast reinforced concrete frame may be exchanged with a spare pre-cast reinforced concrete frame during service. Furthermore, it may be an advantage to be able to reverse the operating direction of the sluice gate by turning it 180 degrees.

In one or more embodiments, the casing comprises an opening between its side panels, such that water can flow to and from a sluice gate positioned within the casing.

In one or more embodiments, the casing comprises an opening between its side panels, such that water can flow to and from a first frame, such as a pre-cast reinforced concrete frame, according to the present invention positioned within the casing.

In one or more embodiments, the casing comprises a front panel with an opening, and wherein the opening is adapted such that water can flow to a sluice gate positioned within the casing; and wherein the casing further comprises a back panel with an opening, and wherein the opening is adapted such that water can flow from a sluice gate positioned within the casing.

In one or more embodiments, the casing comprises a front panel with an opening, and wherein the opening is adapted such that water can flow to a sluice gate positioned within the casing.

In one or more embodiments, the casing comprises a back panel with an opening, and wherein the opening is adapted such that water can flow from a sluice gate positioned within the casing.

In one or more embodiments, the casing is made of reinforced concrete. In one or more embodiments, the casing is pre-cast.

In one or more embodiments, the casing comprises at least one lifting anchor or coupler adapted for receiving a lifting anchor, preferably one or more pairs of lifting anchors or couplers adapted for receiving a lifting anchor to provide a stable lift.

In order to avoid that water will undermine the base panel; it may be an advantage to extend the base panels beyond the side panels, preferably beyond the front, back and outer side/face of the side panel. In one or more embodiments, the base panel extends beyond the side panels.

In one or more embodiments, the base panel of the casing extends beyond the front of the side panels.

In one or more embodiments, the base panel of the casing extends beyond back of the side panels.

In one or more embodiments, the base panel of the casing extends beyond the outer side/face of the side panels.

In one or more embodiments, the base panel of the casing extends beyond the front and/or the back and/or the outer side of the side panels.

In one or more embodiments, the part of the base panel of the casing extending beyond the side panels comprises channels adapted for receiving an earth anchor.

In one or more embodiments, the reinforcement extends beyond the side panels of the casing, preferably beyond the front and back of the side panel. This will allow the pre-fabricated sluice gate system to be built into other reinforced concrete structures.

In one or more embodiments, the reinforcement extends beyond the front of the side panels of the casing.

In one or more embodiments, the reinforcement extends beyond the back of the side panels of the casing.

In one or more embodiments, the reinforcement extends beyond the outer side/face of the side panels of the casing.

In one or more embodiments, the reinforcement extends beyond the front and/or the back and/or the outer side of the side panels of the casing.

In one or more embodiments, the outer face of the side panels each comprise a channel configured for receiving a reinforcement plate adapted for being imbedded in the adjacent dam section.

In one or more embodiments, the base panel extends beyond the side panels, and wherein the part of the base panel extending beyond the side panels comprises channels adapted for receiving an earth anchor.

In one or more embodiments, the outer face of the side panels each comprise a channel configured for receiving a reinforcement plate adapted for being imbedded in the adjacent dam section.

The problem is furthermore solved by the method of claim 13.

### Brief description of the figures

Figure 1 shows a pre-fabricated water control sluice gate system with two sluice gate members (mitre gate) in accordance with various embodiments of the invention;
Figure 2 shows a pre-fabricated water control sluice gate system with one sluice gate member (flap gate) in accordance with various embodiments of the invention;
Figure 3 shows a pre-fabricated water control sluice gate system with one sluice gate member (vertical rising gate) in accordance with various embodiments of the invention; and
Figure 4 shows a casing adapted for receiving the first frame, such as a pre-cast reinforced concrete frame, in accordance with various embodiments of the invention.

### Detailed description of the invention

The following pre-fabricated water control sluice gate systems are constructed of reinforced concrete, but could also be constructed of other materials.

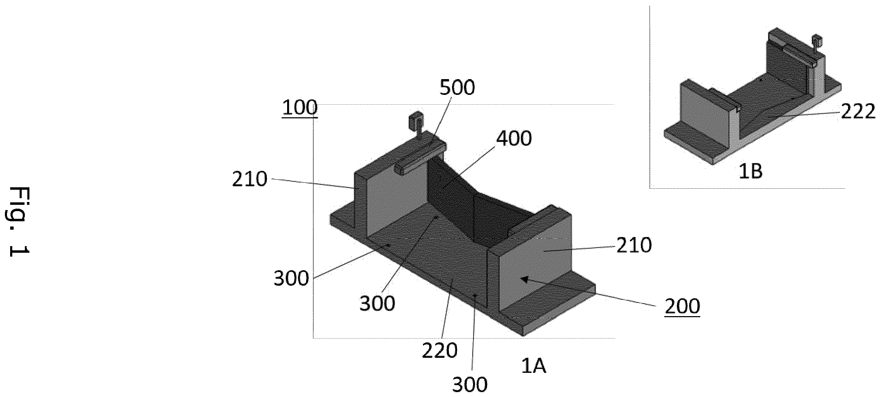

Figure 1 shows a pre-fabricated water control sluice gate system with two sluice gate members (mitre gate) in accordance with various embodiments of the invention. Figure 1A shows the sluice gate member 400 in a closed position, and a Figure 1B shows the sluice gate member in an open position. The pre-fabricated water control sluice gate system 100 comprises a pre-cast reinforced concrete frame 200, lifting anchors 300, two sluice gate members 400, and an actuator 500 adapted for moving the sluice gate members 400.

The pre-cast reinforced concrete frame 200 comprises two pre-cast reinforced concrete side panels 210, and a pre-cast reinforced concrete base panel 220 interconnecting the two side panels 210. The side base panel 220 is adapted for mounting the sluice gate members 400 thereto.

The base panel 220 is shown extending beyond the outer side/face of the side panels 210. Large stones may be placed on this part to keep the pre-cast reinforced concrete frame 200 in place.

A part of the base panel 220 is configured as a lower gate member 222 extending between the two side panels 210. The lower gate member 222 is positioned behind the sluice gate members 400 to support the latter.

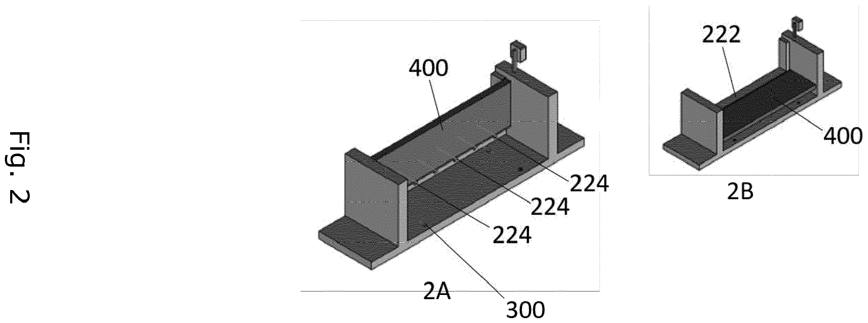

Figure 2 shows a pre-fabricated water control sluice gate system with one sluice gate member (flap gate) 400 in accordance with various embodiments of the invention.

Figure 2A shows the sluice gate member 400 in a closed position, and a Figure 2B shows the sluice gate member in an open position.

The pre-cast reinforced concrete base panel is configured as a lower gate member 222 extending between the two side panels. The lower gate member 222 is positioned behind the sluice gate member to support the latter, but also to elevate the water flow away from the dirt/foundation below the base panel. The water close to the dirt/foundation below the base panel will thus be stagnant. The lower gate member 222 comprises water/air channels 224 adapted to be connected to a source of water and/or compressed air. Water and/or compressed air may thereby be used to remove sediments blocking the function of the one or more sluice gate members.

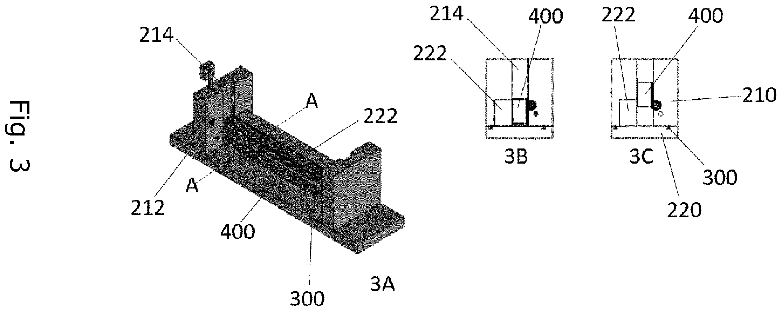

Figure 3 shows a pre-fabricated water control sluice gate system with one sluice gate member (vertical rising gate) in accordance with various embodiments of the invention. Figures 3A (perspective view) and 3B (cross-sectional view) show the sluice gate member 400 in an open position, while Figure 3C (cross-sectional view) shows the sluice gate member in a closed position.

The pre-cast reinforced concrete base panel 220 is configured as a lower gate member 222 extending between the two side panels. The lower gate member 222 is positioned in front of the sluice gate member to elevate the water flow away from the dirt/foundation below the base panel. The water close to the dirt/foundation below the base panel will thus be stagnant. The lower gate member 222 may comprise (not shown) water/air channels adapted to be connected to a source of water and/or compressed air. The water/air channel outlets may be positioned on either side of the lower gate member 222.

The inner side/face 212 of the side panels each comprise a channel 214 configured for receiving a moving gate member 400.

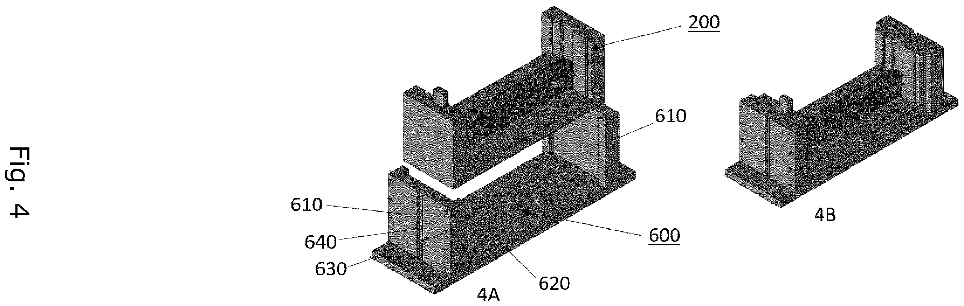

Figure 4 shows a casing 600 adapted for receiving the pre-cast reinforced concrete frame 200 in accordance with various embodiments of the invention. Figure 4A shows the pre-cast reinforced concrete frame 200 about to be inserted into the casing 600, and Figure 4B shows the pre-cast reinforced concrete frame inserted into the casing.

The casing 600 comprises two side panels 610 and a base panel 620. The base panel 620 is adapted for supporting the base panel 220 of the pre-cast reinforced concrete frame 200, and each side panel 610 is adapted for supporting a side panel 210 of the pre-cast reinforced concrete frame 200.

The reinforcement 630 extends beyond the side panels 610 of the casing 600, here shown beyond the front, back and outer face of the side panel. This will allow the pre-fabricated sluice gate system to be built into other reinforced concrete structures.

The outer face of the side panels each comprise a channel 640 configured for receiving a reinforcement plate adapted for being imbedded in the adjacent dam section.

### References

- 100: Pre-fabricated water control sluice gate system
- 200: Pre-cast reinforced concrete frame
- 210: Side panel
- 212: Inner side/face of the side panel
- 214: Channel
- 220: Base panel
- 222: Lower gate member
- 300: Lifting anchor
- 400: Gate member
- 500: Actuator
- 600: Casing
- 610: Side panel
- 620: Base panel
- 630: Reinforcement
- 640: Channel

## Claims

1. A pre-fabricated water control sluice gate system (100) comprising:
a. a first frame (200) comprising:
i. two side panels (210); and
ii. a base panel (220) interconnecting the two side panels (210);
iii. at least one lifting anchor (300) or coupler adapted for receiving a lifting anchor;
b. one or more sluice gate members (400); and
c. an actuator (500) adapted for moving the one or more gate members;
wherein the side (210) and/or base (220) panels are adapted for mounting the one or more gate sluice members (400) thereto;
**characterized in that** the base panel comprises channels adapted to be connected to suction means.

2. A pre-fabricated sluice gate system (100) according to claim 1, wherein the base panel comprises channels (224) adapted to be connected to a source of water and/or compressed air.

3. A pre-fabricated sluice gate system (100) according to claim 2, wherein the outlet of the channels is positioned in close proximity to the one or more gate members (400).

4. A pre-fabricated sluice gate system (100) according to any one of the claims 1-3, wherein the inlet of the channels adapted to be connected to suction means is positioned in close proximity to the one or more gate members (400).

5. A pre-fabricated sluice gate system (100) according to any one of the claims 1-4, wherein a part of the base panel (220) is configured as a lower gate member (222) extending between the two side panels (210).

6. A pre-fabricated sluice gate system (100) according to claim 5, wherein the lower gate member comprises channels (224) adapted to be connected to a source of water and/or compressed air.

7. A pre-fabricated sluice gate system (100) according to claim 6, wherein the outlet of the channels (224) is positioned in close proximity to the one or more gate members (400).

8. A pre-fabricated sluice gate system (100) according to any one of the claims 1-7, wherein the base panel (220) extends beyond the side panels (210).

9. A pre-fabricated sluice gate system (100) according to claim 8, wherein the part of the base panel (220) extending beyond the side panels (210) comprises channels adapted for receiving an earth anchor.

10. A pre-fabricated sluice gate system (100) according to any one of the claims 1-9, wherein the side (210) and/or base (220) panels are made from a reinforced castable material, and wherein the reinforcement extends beyond the side (210) and/or base (220) panels.

11. A pre-fabricated sluice gate system (100) according to any one of the claims 1-10, wherein the inner side/face (212) of the side panels each comprise a channel (214) configured for receiving a moving gate member (400).

12. A pre-fabricated sluice gate system according to any one of the claims 1-11, further comprising a casing (600) adapted for receiving the first frame, the casing comprising two side panels (610) and a base panel (620), wherein the base panel (620) is adapted for supporting the base panel (220) of the first frame (200), and wherein each side panel (610) is adapted for supporting a side panel (210) of the first frame (200).

13. A method for segregating a body of water into two distinct parts with a pre-fabricated water control sluice gate system comprising the steps of:
- sinking a pre-fabricated water control sluice gate system according to any one of the claims 1-12 at a predetermined location in the body of water, the side panels of the first frame having been chosen so as to have sufficient height to protrude above the water level of the body of water after the sluice gate system is sunk at its predetermined location; and
- building a dam up against the outer face of the side panels.

## Patentansprüche

1. Vorgefertigtes Schleusentorsystem (100) zur Wasserkontrolle, umfassend:
a. einen ersten Rahmen (200), umfassend:
i. zwei Seitenpaneele (210); und
ii. ein Bodenpaneel (220), das die beiden Seitenpaneele (210) miteinander verbindet;
iii. mindestens einen Hebeanker (300) oder ein Koppelstück, das zum Aufnehmen eines Hebeankers angepasst ist;
b. ein oder mehrere Schleusentorelemente (400); und
c. einen Aktuator (500), der für das Bewegen des einen oder der mehreren Torelemente angepasst ist;
wobei die Seiten- (210) und/oder Bodenpaneele (220) für das Montieren des einen oder der mehreren Schleusentorelemente (400) daran angepasst sind;
**dadurch gekennzeichnet, dass** das Bodenpaneel Kanäle umfasst, die angepasst sind, um mit Saugmitteln verbunden zu werden.

2. Vorgefertigtes Schleusentorsystem (100) nach Anspruch 1, wobei das Bodenpaneel Kanäle (224) umfasst, die angepasst sind, um mit einer Wasser- und/oder Druckluftquelle verbunden zu werden.

3. Vorgefertigtes Schleusentorsystem (100) nach Anspruch 2, wobei der Auslass der Kanäle in unmittelbarer Nähe des einen oder der mehreren Torelemente (400) positioniert ist.

4. Vorgefertigtes Schleusentorsystem (100) nach einem der Ansprüche 1-3, wobei der Einlass der Kanäle, die angepasst sind, um mit Saugmitteln verbunden zu werden, in unmittelbarer Nähe des einen oder der mehreren Torelemente (400) positioniert ist.

5. Vorgefertigtes Schleusentorsystem (100) nach einem der Ansprüche 1-4, wobei ein Teil des Bodenpaneels (220) als ein unteres Torelement (222) konfiguriert ist, das sich zwischen den beiden Seitenpaneelen (210) erstreckt.

6. Vorgefertigtes Schleusentorsystem (100) nach Anspruch 5, wobei das untere Torelement Kanäle (224) umfasst, die angepasst sind, um mit einer Wasser- und/oder Druckluftquelle verbunden zu werden.

7. Vorgefertigtes Schleusentorsystem (100) nach Anspruch 6, wobei der Auslass der Kanäle (224) in unmittelbarer Nähe des einen oder der mehreren Torelemente (400) positioniert ist.

8. Vorgefertigtes Schleusentorsystem (100) nach einem der Ansprüche 1-7, wobei sich das Bodenpaneel (220) über die Seitenpaneele (210) hinaus erstreckt.

9. Vorgefertigtes Schleusentorsystem (100) nach Anspruch 8, wobei der Teil des Bodenpaneels (220), der sich über die Seitenpaneele (210) hinaus erstreckt, Kanäle aufweist, die angepasst sind, um einen Erdanker aufzunehmen.

10. Vorgefertigtes Schleusentorsystem (100) nach einem der Ansprüche 1-9, wobei die Seiten- (210) und/oder Bodenpaneele (220) aus einem verstärkten gießbaren Material hergestellt sind und wobei sich die Verstärkung über die Seiten- (210) und/oder Bodenpaneele (220) hinaus erstreckt.

11. Vorgefertigtes Schleusentorsystem (100) nach einem der Ansprüche 1-10, wobei die innere Seite/Fläche (212) der Seitenpaneele jeweils einen Kanal (214) aufweist, der konfiguriert ist, um ein bewegliches Torelement (400) aufzunehmen.

12. Vorgefertigtes Schleusentorsystem nach einem der Ansprüche 1-11, ferner umfassend ein Gehäuse (600), das angepasst ist, um den ersten Rahmen aufzunehmen, wobei das Gehäuse zwei Seitenpaneele (610) und ein Bodenpaneel (620) umfasst, wobei das Bodenpaneel (620) angepasst ist, um das Bodenpaneel (220) des ersten Rahmens (200) zu tragen, und wobei jedes Seitenpaneel (610) angepasst ist, um ein Seitenpaneel (210) des ersten Rahmens (200) zu tragen.

13. Verfahren zum Trennen eines Wasserkörpers in zwei verschiedene Teile mit einem vorgefertigten Schleusentorsystem zur Wasserkontrolle, das die folgenden Schritte umfasst:
- Absenken eines vorgefertigten Schleusentorsystems zur Wasserkontrolle nach einem der Ansprüche 1-12 an einer vorbestimmten Stelle im Wasserkörper, wobei die Seitenpaneele des ersten Rahmens so gewählt wurden, dass sie eine ausreichende Höhe aufweisen, um nach dem Absenken des Schleusentorsystems an seiner vorbestimmten Stelle über den Wasserspiegel des Wasserkörpers hinaus zu ragen; und
- Bauen eines Dammes gegen die äußere Fläche der Seitenpaneele.

## Revendications

1. Système préfabriqué de vanne à glissières de commande d'eau (100) comprenant :
a. un premier bâti (200) comprenant :
i. deux panneaux latéraux (210) ; et
ii. un panneau de base (220) reliant les deux panneaux latéraux (210) ;
iii. au moins une ancre de levage (300) ou un coupleur conçu pour recevoir une ancre de levage ;
b. un ou plusieurs éléments vanne à glissières (400) ; et
c. un actionneur (500) conçu pour déplacer lesdits un ou plusieurs éléments vanne ;
dans lequel les panneaux latéraux (210) et/ou de base (220) sont conçus pour le montage desdits un ou plusieurs éléments vanne à glissières (400) sur ceux-ci ;
**caractérisé en ce que** le panneau de base comprend des canaux conçus pour être raccordés à des moyens d'aspiration.

2. Système préfabriqué de vanne à glissières (100) selon la revendication 1, dans lequel le panneau de base comprend des canaux (224) conçus pour être raccordés à une source d'eau et/ou d'air comprimé.

3. Système préfabriqué de vanne à glissières (100) selon la revendication 2, dans lequel la sortie des canaux est positionnée à proximité immédiate desdits un ou plusieurs éléments vanne (400).

4. Système préfabriqué de vanne à glissières (100) selon l'une quelconque des revendications 1 à 3, dans lequel l'entrée des canaux conçus pour être raccordés à des moyens d'aspiration est positionnée à proximité immédiate desdits un ou plusieurs éléments vanne (400).

5. Système préfabriqué de vanne à glissières (100) selon l'une quelconque des revendications 1 à 4, dans lequel une partie du panneau de base (220) est configurée sous la forme d'un élément vanne inférieur (222) s'étendant entre les deux panneaux latéraux (210).

6. Système préfabriqué de vanne à glissières (100) selon la revendication 5, dans lequel l'élément vanne inférieur comprend des canaux (224) conçus pour être raccordés à une source d'eau et/ou d'air comprimé.

7. Système préfabriqué de vanne à glissières (100) selon la revendication 6, dans lequel la sortie des canaux (224) est positionnée à proximité immédiate desdits un ou plusieurs éléments vanne (400).

8. Système préfabriqué de vanne à glissières (100) selon l'une quelconque des revendications 1 à 7, dans lequel le panneau de base (220) s'étend au-delà des panneaux latéraux (210).

9. Système préfabriqué de vanne à glissières (100) selon la revendication 8, dans lequel la partie du panneau de base (220) s'étendant au-delà des panneaux latéraux (210) comprend des canaux conçus pour recevoir une ancre terrestre.

10. Système préfabriqué de vanne à glissières (100) selon l'une quelconque des revendications 1 à 9, dans lequel les panneaux latéraux (210) et/ou de base (220) sont constitués d'un matériau renforcé apte à être coulé, et dans lequel le renfort s'étend au-delà des panneaux latéraux (210) et/ou de base (220).

11. Système préfabriqué de vanne à glissières (100) selon l'une quelconque des revendications 1 à 10, dans lequel le côté/la face interne (212) des panneaux latéraux comprennent chacun un canal (214) configuré pour recevoir un élément vanne mobile (400) .

12. Système préfabriqué de vanne à glissières selon l'une quelconque des revendications 1 à 11, comprenant en outre une enveloppe (600) conçue pour recevoir le premier bâti, l'enveloppe comprenant deux panneaux latéraux (610) et un panneau de base (620), dans lequel le panneau de base (620) est conçu pour porter le panneau de base (220) du premier bâti (200), et dans lequel chaque panneau latéral (610) est conçu pour porter un panneau latéral (210) du premier bâti (200).

13. Procédé de séparation d'un plan d'eau en deux parties distinctes avec un système préfabriqué de vanne à glissières de commande d'eau comprenant les étapes de :
- l'immersion d'un système préfabriqué de vanne à glissières de commande d'eau selon l'une quelconque des revendications 1 à 12 à un emplacement prédéterminé dans le plan d'eau, les panneaux latéraux du premier bâti ayant été choisis de manière à avoir une hauteur suffisante pour faire saillie au-dessus du niveau d'eau du plan d'eau après que le système de vanne à glissières est immergé à son emplacement prédéterminé ; et
- la construction d'un barrage contre la face externe des panneaux latéraux.
